# EUROPÄISCHE PATENTSCHRIFT

(11) **EP 0 990 356 B1**
(45) Veröffentlichungstag und Bekanntmachung des Hinweises auf die Patenterteilung: **30.01.2002**
(21) Anmeldenummer: 98900836.2
(22) Anmeldetag: 30.01.1998
(51) Int. Cl.: H04Q 7/32, G07F 7/08, G07F 7/10

(54) **MOBILGERÄT, CHIPKARTE UND KOMMUNIKATIONSVERFAHREN**
MOBILE DEVICE, CHIP CARD AND METHOD OF COMMUNICATION
APPAREIL MOBILE, CARTE A PUCE ET PROCEDE DE COMMUNICATION

(30) Priorität: 16.06.1997 WO PCT/CH97/00237; 19.11.1997 CH 267397
(43) Veröffentlichungstag der Anmeldung: 05.04.2000
(73) Patentinhaber: Swisscom Mobile AG, 3050 Bern (CH)
(72) Erfinder: RITTER, Rudolf, CH-3052 Zollikofen (CH)
(74) Vertreter: BOVARD AG - Patentanwälte
(86) Internationale Anmeldenummer: CH9800036
(87) Internationale Veröffentlichungsnummer: WO9858510

(56) Entgegenhaltungen:
- WO-A-96/25828
- WO-A-96/32700
- WO-A-96/38814
- US-A- 5 201 067
- GUTHERY: "JAVA CARD: Internet Computing on a Smart Card" IEEE INTERNET COMPUTING,Februar 1997, Seiten 57-59, XP002077647 USA
- COMBANIERE C: "NOUVELLES POSSIBILIT S DE PAIEMENT" REE: REVUE GENERALE DE L ELECTRICITE ET DE L ELECTRONIQUE, Nr. 4, 1. Oktober 1995, Seiten 57-65, XP000533330

## Beschreibung

Die vorliegende Erfindung bezieht sich auf eine Chipkarte gemäss dem Patentanspruch 1. Insbesondere bezieht sich die vorliegende Erfindung auf eine Chipkarte, die in ein Mobilgerät einführbar ist, zum Beispiel ein Funktelefon oder ein Rechner mit erweiterten Kommunikationsmöglichkeiten.

In Mobiltelefon-Netzen, wie beispielsweise im GSM-Netz (Global System for Mobile Communication) oder in einem UMTS-Netz (Universal Mobile Telecommunications System), wird die Identität der Abonnenten in einer im Mobilgerät eingesetzten Chipkarte gespeichert, die oft als SIM-Karte (Subscriber Identity Module) bezeichnet wird. Die SIM-Karte ist wegnehmbar, so dass der Benutzer die für ihn bestimmten Anrufe auf dem Mobilgerät seiner Wahl empfangen kann, indem er die SIM-Karte von einem auf ein anderes Gerät überträgt. Ausserdem sind Verfahren zum Laden der SIM-Karte mit einem Geldbetrag auf verschiedene Arten sowie zum Belasten dieses Betrages mit den Telefon-Kommunikationstaxen bekannt.

Die SIM-Karten existieren heute in zwei genormten Formaten. Das "Full Size"-Format entspricht der Grösse einer Kreditkarte, während das "Plugln"-Format, welches speziell an die miniaturisierten tragbaren Telefone angepasst ist, ungefähr 25 mm x 10 mm gross ist. Die Funktionalitäten der Karten mit diesen zwei Formaten sind identisch.

Die SIM-Karten enthalten im allgemeinen Datenverarbeitungsmittel, meistens einen in einem Chip integrierten GSM-Mikrokontroller. Diese Verarbeitungsmittel enthalten einerseits eine Zone mit einem Schreib-/Lese- und einem gesicherten Speicherbereich, welche das Abspeichern von Programmen und/oder Dateien erlaubt, insbesondere der Identifikationsdaten des Abonnenten, der die Karte besitzt sowie Berechnungs- und Verarbeitungsmittel, welche in der Lage sind, verschiedene Algorithmen auszuführen, insbesondere Algorithmen, welche die Durchführung der Abonnenten-Identifikation und der Kommunikationsverschlüsselung erlauben.

Diese Architektur der SIM-Karten ist sehr "offen", da an verschiedene Mehrwertdienste (VAS, Value Added Services) gedacht wurde, welche voll von den Funktionalitäten dieser Karten profitieren können. Insbesondere wurde an zahlreiche Dienste gedacht, welche den auf den SIM-Karten verfügbaren Speicher und/oder die Verarbeitungsmöglichkeiten des Mikrokontrollers auf der Karte zur Erweiterung der Funktionalitäten der kontaktlosen Telefone verwenden.

Neue Daten oder neue Programme, welche für die Ausführung dieser neuen Mehrwertdienste notwendig sind, können im allgemeinen auf eine der drei folgenden Arten auf die Karte geladen werden:
1) Durch Einführen der Karte in eine geeignete Lese-/Schreib-Vorrichtung für Chipkarten. Die ursprünglich, d.h. bevor die Karte dem Kunden geliefert wird, geladenen Daten werden im allgemeinen auf diese Weise geladen. Da geeignete Lese-/Schreib-Vorrichtungen nicht überall verfügbar sind, ist dieses Verfahren nur begrenzt für das Update oder Vervollständigen der auf der Karte schon gespeicherten Informationen anwendbar. Ausserdem muss die SIM-Karte aus dem Mobilgerät herausgezogen werden, um sie in eine andere Vorrichtung einzuführen, was nicht sehr praktisch ist, insbesondere mit den sehr kleinen, nicht sehr praktisch zu handhabenden "Plug-In''-Karten.
2) Durch direktes Eintippen von Daten auf der Tastatur des Mobilgeräts. Aus Gründen der stark reduzierten Grösse der normalerweise für die Mobiltelefone verwendeten Tastaturen sowie der beschränkten Anzahl Tasten ist diese Lösung nur für die Eingabe von sehr kurzen Daten geeignet, zum Beispiel für ein Passwort, einen Geldbetrag oder eine Antwort des Ja-/Nein-Typs während der Programm-Ausführung durch den Mikrokontroller der Karte, jedoch keinesfalls für die Eingabe vollständiger Programme in die SIM-Karte.
3) Die Daten und/oder Programme können auf das Mobilgerät ferngeladen werden, zum Beispiel mit SMS- (Short Message System) oder USSD- (Unstructured Supplementary Service Data)-Kurzmeldungen. Das auf den Namen der Anmelderin lautende Patentdokument EP689368 beschreibt eine Technik, welche die Übertragung von Daten und Programmen auf ein Mobilgerät in transparenter Weise und in beiden Richtungen ermöglicht. Diese Übertragungsart kann jedoch nur von einem anderen, mit dem Mobilfunknetz verbundenen Gerät aus erfolgen, zum Beispiel von einem anderen Mobiltelefon aus. Daten und Programme können auch als Bestandteil von JAVA-Applets ferngeladen werden.

Die auf den Namen der Anmelderin lautende Patentanmeldung WO 98/28900 beschreibt ein Bestellverfahren für Produkte oder Informationen mittels einer Mobilstation. Ein das Produkt und seinen Lieferanten bezeichnender Code muss in die Mobilstation eingegeben werden und wird dann zusammen mit den Identifikationsdaten des Abonnenten dem Produktlieferanten in Form von Kurzmeldungen über das Mobilfunknetz übermittelt. Der Produktcode muss eine grosse Zahl von alphanumerischen Zeichen umfassen, damit das Produkt und der Produktlieferant unzweideutig bezeichnet werden. Ausserdem sind Paritätszeichen notwendig, um eventuelle Fehler im Produktcode zu erkennen oder zu korrigieren. Keines der obenerwähnten Ladeverfahren erweist sich als wirklich geeignet, diese Codes auf komfortable Weise in das Mobilgerät einzugeben.

Umgekehrt verlangt eine bestimmte Anzahl von neuen Mehrwertdiensten, dass von einer externen Vorrichtung aus, zum Beispiel von einem anderen Telefon aus, auf die in einer SIM-Karte gespeicherten Daten oder Programme zugegriffen werden kann.

In der Patentanmeldung WO 96/25828 wird ein Verfahren und ein Mobilgerät beschrieben, mittels welchen verschiedene Typen von Anwendungen ausgeführt werden können, wobei eine Anwendung eines ersten Typs eine passive Anwendung ist während eine Anwendung eines zweiten Typs die Hauptkontrolleinheit des Mobilgeräts steuern kann. Das in WO 96/25828 beschriebene Mobilgerät umfasst zusätzlich zu der Hauptkontrolleinheit, einer Benutzerschnittstelle, einem Funkmodul, einem Audiomodul, einem Speisemodul und einer Verbindungseinheit für Anwendungsmodule, welche als Chipkarte ausgeführt sind, die auch ein SIM-Modul enthalten können, auch eine kontaktlose Schnittstelle, beispielsweise eine Infrarot-Schnittstelle oder eine induktive Schnittstelle, über welche das Mobilgerät Daten, welche insbesondere auch in einem Anwendungsmodul gespeichert sein können, mit einer externen Vorrichtung, beispielsweise ein anderes Mobilgerät, austauschen kann. Der in WO 96/25828 beschriebene Speiseteil umfasst Batterien, deren Ladezustand vom Speiseteil überwacht werden, wobei der Speiseteil den Benutzer des Mobilgeräts informiert, wenn der Ladezustand der Batterien einen bestimmten Wert unterschreitet Falls die Batterien des in WO 96/25828 beschriebenen Mobilgeräts entladen sind, kann allerdings über die kontaktlose Schnittstelle keine Datenübertragung mit einer externen Vorrichtung durchgeführt werden.

Es ist folglich ein Ziel der Erfindung, eine Vorrichtung vorzuschlagen, welche für die bidirektionale Übertragung von Daten und Programmen in eine Chipkarte in einem Mobilgerät oder von dieser ausgehend geeignet ist, und welche insbesondere nicht die Unzulänglichkeiten der Systeme der bisherigen Technik aufweist.

Erfindungsgemäss werden diese Ziele besonders mithilfe einer Chipkarte erreicht, welche die Elemente des Patentanspruches 1 aufweist.

Insbesondere werden die Ziele der Erfindung mithilfe einer in ein Mobilgerät einführbaren Chipkarte erreicht, zum Beispiel ein GSM-Mobilfunktelefon, welches mindestens eine kontaktlose Schnittstelle aufweist, die es den Verarbeitungsmitteln der im Gerät eingeführten Karte ermöglicht, direkt mit einer sich ausserhalb des Mobilgeräts befindlichen extemen Vorrichtung zu kommunizieren, wobei die Chipkarte einen zusätzlichen Energiespeicher und einen zusätzlichen Kommunikationskontroller für die kontaktlose Schnittstelle enthält, welche die Benutzung der Schnittstelle unabhängig von den Batterien des Mobilgeräts ermöglichen.

Mit dieser Erfindung können Telekommunikations-Mobilnetze mit anderen Netzen oder Systemen verknüpft werden.

Bei einer ersten Ausführungsform der Erfindung weist die kontaktlose Schnittstelle mindestens einen auf dem Gehäuse des Mobilgeräts angeordneten infraroten Sender-Empfänger auf. Die direkte Kommunikation zwischen der Chipkarte und einer externen Vorrichtung erfolgt dann folglich über diese infrarote Schnittstelle.

Bei einer Ausführungsform der Erfindung weist die kontaktlose Schnittstelle mindestens eine im Gehäuse des Mobilgeräts integrierte Spule auf. Die direkte Kommunikation zwischen der Chipkarte und einer externen Vorrichtung erfolgt dann folglich über elektromagnetische Wellen.

Ein auf der SIM-Karte angeordneter Kommunikationskontroller ermöglicht es, die durch diese Schnittstelle übertragenen Daten direkt in die SIM-Karte zu speichern.

So können Daten durch eine externe Vorrichtung, zum Beispiel ein anderes kontaktloses Telefon oder irgendeine beliebige Datenverarbeitungs-Vorrichtung, in die Chipkarte eingeschrieben oder von der Karte aus gelesen werden.

Die vorliegende Erfindung wird mithilfe der als Beispiel gegebenen Beschreibung besser verständlich und durch die anliegenden Figuren veranschaulicht, welche folgendes zeigen:

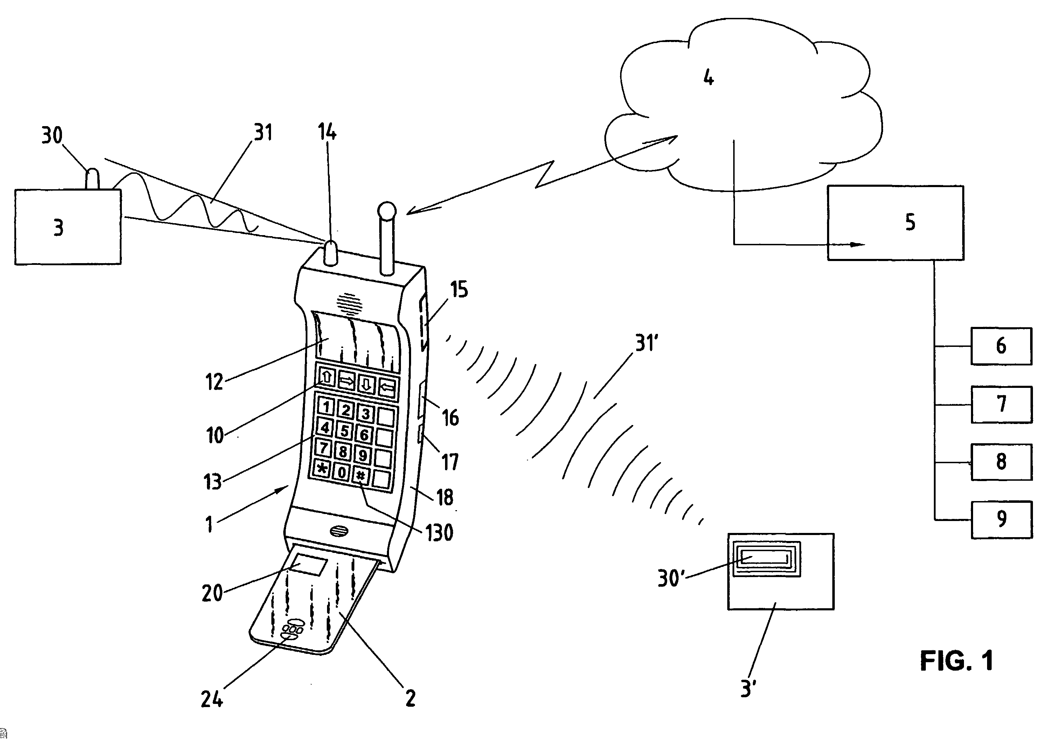

Die Figur 1 eine schematische und perspektivische Ansicht einer ersten Ausführungsform des Systems, die nur als Hintergrundinformation angeführt ist.
Die Figur 2 eine schematische und perspektivische Ansicht einer zweiten Ausführungsform des Systems der Erfindung.

Mit dem Bezugszeichen 1 ist ein Mobilgerät dargestellt, zum Beispiel ein GSM-Mobilfunktelefon oder ein tragbarer Computer mit Kommunikationsmöglichkeiten in einem Mobilfunknetz. Das Mobilgerät weist ein Gehäuse 18, eine Tastatur 13 und eine Anzeige 12 auf. Ausser normalen Nummertasten enthält die Tastatur 13 vorzugsweise mindestens eine Bestätigungstaste 130 sowie Cursorsteuerungsmittel 10.

Das Mobilgerät 1 kann in einem konventionellen Mobilfunknetz 4, zum Beispiel einem GSM-Netz, eingesetzt werden, um Sprachen und Daten zu übertragen. Das Mobilgerät 1 weist eine konventionelle Aufnahmestelle zur Einführung einer wegnehmbaren Identifizierungskarte 2 auf, zum Beispiel eine SIM-Karte 2 (Subscriber Identity Module), die den Benutzer im Telekommunikationsnetz 4 identifiziert. SIM-Karten werden jetzt schon unter anderem in GSM-, DCS-, oder PCS-Mobilgeräten eingesetzt oder auch in zukünftigen Fixnetzen mit Teilnehmeridentifizierung durch Chipkarten. Die SIM-Karte kann entweder eine Full-Size-Karte oder eine Plug-in-Karte sein; sie wird durch ein Kontaktgebiet 24 auf der Oberfläche der Karte mit dem Endgerät 1 verbunden. Andere Kartenformate sowie kontaktlose SIM-Karten können aber ebenfalls im Rahmen dieser Erfindung angewandt werden. Die SIM-Karte 2 enthält Datenverarbeitungsmittel, zum Beispiel einen bekannten GSM-SIM-Mikrokontroller 20. SIM-Karten sind zum Beispiel in der technischen Spezifikation GSM 11.11 und GSM 11.14 beschrieben, die seit 1995 bzw. 1996 beim Sekretariat des European Telecommunications Standards Institute, F-06921 Sophia Antipolis, erhältlich ist Andere Identifizierungskarten, zum Beispiel Mehrzweckkarten, die unter dem Begriff Opencard bekannt sind, können auch in dieser Erfindung eingesetzt werden.

Die Datenverarbeitungsmittel 20 sind unter anderem zum Speichern von Identifikationsdaten eines Abonnenten des genannten Mobilfunknetzes bestimmt. Als Identifikationsdaten können zum Beispiel die IMSI (International Mobile Subscriber Identity), die MSISDN (Mobile Station Identity Number) und/oder die IDUI (International Debit User Identification) des Benutzers des Telekommunikationsnetzes 4 eingesetzt werden.

Das Mobilgerät 1 enthält mindestens eine zusätzliche bidirektionale Schnittstelle wie zum Beispiel eine infrarote Schnittstelle mit einem infraroten Sender-Empfänger 14 auf dem Gehäuse 18. Durch diese Schnittstelle können das Mobilgerät und eine externe Vorrichtung 3 Daten und Programme kontaktlos und ohne Beanspruchung des Mobilfunknetzes 4 miteinander austauschen.

Die Schnittstelle enthält ausserdem einen integrierten Kommunikationskontroller 16, um die infrarote LED-Diode 14 zu steuern und um Daten mit dieser Diode zu senden und zu empfangen. Der Kommunikationskontroller ist unter anderem für das serielle Übertragungsprotokoll, zum Beispiel RS232, über die Schnittstelle 31 zuständig. Ausserdem weist der Kommunikationskontroller Kommunikationsmittel auf, um Daten mit dem GSM-Kontroller 20 auf der Chipkarte über das Kontaktgebiet 24 auszutauschen. Diese Kommunikationsmittel können zum Beispiel Register oder Speicherbereiche umfassen, auf die der GSM-Mikrokontroller 20 durch die Kontakte 24 mit einer speziellen Software zugreifen kann. Umgekehrt können die Kommunikationsmittel auch Softwareanwendungen umfassen, um Daten im Speicherbereich des GSM-Kontrollers 20 zu lesen und zu schreiben. Dadurch können auf einfache Weise Daten oder Programme zwischen einer externen Vorrichtung 3 und einem dem GSM-Kontroller 20 zugänglichen Speicherbereich übertragen werden. Daten aus der externen Vorrichtung 3 können beispielsweise auf der Chipkarte ferngeladen werden, und umgekehrt kann die externe Vorrichtung 3 direkt die in der Chipkarte 2 gespeicherten Daten benutzen oder darauf zugreifen, ohne dadurch das Mobilfunknetz 4 beanspruchen zu müssen.

Die Schnittstelle 14, 16 wird vorzugsweise durch einen unabhängigen Energiespeicher 17 gespeist, zum Beispiel durch einen Akkumulator oder einen Kondensator. Dadurch kann die Schnittstelle auch benutzt werden, wenn die Batterien des Mobilgeräts 1 entladen sind oder wenn das Mobilgerät ausgeschaltet ist. Vorzugsweise kann die Schnittstelle jedoch auch von der Hauptbatterie des Mobilgeräts elektrisch versorgt werden, wenn diese ausreicht.

Anstelle der infraroten Sender-Empfänger 14, oder vorzugsweise zusätzlich zu diesem Sender-Empfänger, enthält das Mobilgerät in einer Variante eine andere bidirektionale Schnittstelle, in diesem Fall eine an der Rückseite des Gehäuses 18 integrierten Antenne 15. Mit dieser Schnittstelle kann das Mobilgerät ebenfalls Daten und Programme induktiv oder auf elektromagnetische Weise direkt mit einer externen Vorrichtung 3' ohne Beanspruchung des Mobilfunknetzes 4 austauschen. Als Antenne kann beispielsweise eine Spule angewendet werden, die zum Beispiel durch Windung eines Drahtes, durch Drucken oder Ätzen einer Konduktorfolie oder mit Strip Lines hergestellt werden kann. Je nach Anwendung wird eine Übertragungsfrequenz von beispielsweise 125kHz, 13.56 MHz, 400 MHz oder 5.2 GHz benutzt, wobei die angewendete Frequenz auch von der benötigten Datenübertragunsrate abhängig ist. Eine Frequenz von ungefähr 13.56 MHz wird jedoch vorgezogen, um eine Kompatibilität mit Bankanwendungen zu gewährleisten. Die Antenne wird im Gehäuse so integriert, dass die Absorption möglich klein gehalten wird und dass eine Übertragung mit der gewählten Frequenz auch möglich ist.

Die zweite Schnittstelle 15 wird vorzugsweise ebenfalls von dem Kommunikationskontroller 16 gesteuert. Falls eine infrarote Schnittstelle 14 und eine induktive / elektromagnetische Schnittstelle 15 beide im selben Mobilgerät 1 integriert sind, ist vorzugsweise derselbe Kontroller 16 für beide Schnittstellen zuständig. Dadurch können Daten oder Programme zwischen einer externen Vorrichtung 3 oder 3' und dem Prozessor 20 auf der Karte entweder über die infraroten Schnittstelle 14 - 31 oder über die induktive / elektromagnetische Schnittstelle 15 - 31' in beiden Richtungen übertragen werden, wie später näher erklärt.

Wird das Mobilgerät 1 als Identifizierungsmittel für ein externes System 3' benutzt, zum Beispiel als elektronischer Türschlüssel, wird vorzugsweise eine Kopie der im Kommunikationskontroller 16 gespeicherten Identifizierung in den gesicherten Bereich der SIM-Karte 2 geladen, und ein Update-Mechanismus vorgesehen, um die im Kontroller 16 gespeicherte Identifizierung mit der Identifizierung aus der SIM-Karte zu aktualisieren, falls das Mobilgerät mit einer anderen SIM-Karte eingesetzt wird. Damit kann die SIM-Karte nach einem Update auch als Identifizierungsmittel in einem anderen Gerät eingesetzt werden.

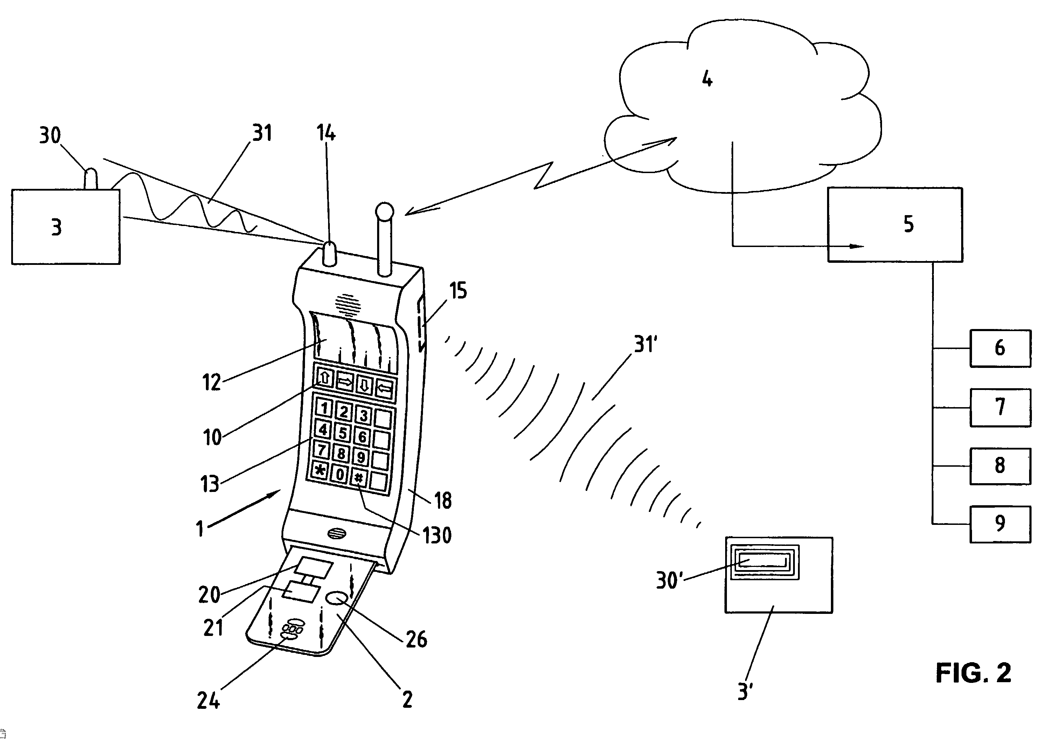

Die Figur 2 zeigt eine andere Variante des erfindungsgemässen Systems, in welchem ein Kommunikationskontroller 21 für den infraroten und / oder induktiven / elektromagnetischen Sender-Empfänger 14/15 in der Chipkarte 2 statt im Mobilgerät 1 integriert ist. Der Kommunikationskontroller kann, wie in der ersten Variante, den Sender/Empfänger 14/15 direkt ansteuern, diesmal über das Kontaktgebiet 24. Ein unabhängiger Energiespeicher 26 für den Kommunikationskontroller und für den Sender-Empfänger 14/15 ist vorzugsweise ebenfalls in der'Karte 2 integriert, damit der Kommunikationskontroller 21 unabhängig vom Mobilgerät 1 und vom GSM-Kontroller 20 arbeiten kann. Die Schnittstelle 15 und der Kommunikationskontroller 16 bzw. 21 können auch von der externen Vorrichtung durch die induktive Schnittstelle 31' mit Energie versorgt werden. In diesem Fall wird die induktiv übertragene Energie vorzugsweise in einer Speicherkapazität 16/26 im Mobilgerät oder auf der Karte gespeichert.

Der Kommunikationskontroller 21 umfasst vorzugsweise nur einen integrierten Chip 21, der direkt mit dem konventionellen GSM-Mikrokontroller 20 verbunden ist. Diese Anordnung erlaubt es, Standard-Mikrokontroller 20, welche zu geringen Preisen verfügbar sind, zu verwenden und diesen ein spezifisches Kommunikationsmodul anzufügen. Der Fachmann wird jedoch feststellen, dass es ebenso möglich ist, den Kommunikationskontroller 21 im selben integrierten Schaltkreis wie den GSM-Mikrokontroller 20 zu integrieren.

Der Kommunikationskontroller 21 beziehungsweise 16 kann Verschlüsselungs- und Signierungsmittel umfassen, um empfangene Daten zu entschlüsseln und um gesandte Daten zu verschlüsseln und zu signieren. Damit können die Verbindungen durch die Schnittstelle 31 beziehungsweise 31' gesichert werden. Als Verschlüsselungsverfahren kann beispielsweise das TTP-Verfahren (Trusted Third Party) oder ein Point-to-Point-Verfahren (PTP) eingesetzt werden.

In einer bevorzugten Variante werden die Verschlüsselungs- und Signierungsmittel eingesetzt, um SMS- oder USSD-Meldungen durch das Mobilfunknetz 4 zu sichern. In diesem Fall sind diese Mittel vorzugsweise im GSM-Prozessor 20 statt im Kommunikationskontroller 21/16 integriert.

Die SIM-Karte 2 ist, wie schon erwähnt, mit dem Mobilfunknetz 4, beispielsweise mit einem GSM-Netz, verbunden, wenn sie im Mobilgerät 1 steckt. Ein SIM-Server 5 zur Verwaltung von Kurzmeldungen (SMSC, Short Message Service Center) ist ebenfalls an das Netz 4 angeschlossen; der SIM-Server 5 ist so ausgestattet, dass er mit der SIM-Karte 1 mittels speziellen SMS- undloder USSD- Kurzmeldungen über das Mobilfunknetz 4 kommunizieren kann. Bekannte Filtermittel im SIM-Server und in den SIM-Karten erlauben es, spezielle Dienste, wie den Austausch von Dateien, Instruktionen und Programmen zwischen dem SIM-Server und einer SIM-Karte, auszuführen. Der SIM-Server wird von einem SIM-Operator betrieben, der in der Regel auch das Kommunikationnetz 4 verwaltet.

Ein TTP-Server 7 ist ebenfalls am SIM-Server 5 angeschlossen, um mindestens gewisse spezielle Kurzmeldungen zu verschlüsseln und dadurch zu sichern, dass die Vertraulichkeit, Authentizität der Identität, Authentizität der Information, Integrität und Nichtabstreitbarkeit des Ursprungs gewährleistet sind. Ein Point-to-Point-Server 6 kann auch eingesetzt werden, um mit einem Point-to-Point-Verfahren verschlüsselte Kurzmeldungen zu kodieren, beziehungsweise zu dekodieren.

Der SIM-Server ist ausserdem vorzugsweise mit einer OpenCard-Plattform 8 verbunden, um die SIM-Karte auch in einem OpenCard-System benutzen zu können. Das OpenCard-System ist ein von International Business Machines Corporation, Inc., Netscape, NCI, und Sun Microsystems Inc, vorgeschlagenes standardisiertes System, das die Interkonnektion von verschiedenen Chipkarten auf verschiedenen Hardware- und Software-Plattformen erlaubt. Dadurch können das Mobilgerät 1 und die erfindungsgemässe SIM-Karte 2 auch in einer OpenCard-kompatiblen Umgebung, zum Beispiel in einem NC-Netz (Network Computer), eingesetzt werden. Aus einer Plattform 8 und durch das Netz 4 ferngeladene Java-Applets können dann von den Verarbeitungsmitteln 20, 21 ausgeführt oder von diesen durch die Schnittstelle 31, 31' weiter an eine externe Vorrichtung 3, 3' übertragen werden.

Verschiedene Dienstanbieter und Anwendungsserver 9 sind ausserdem mit dem SIM-Server 5 verbunden, um diverse Mehrwertdienste (VAS, Value Added Services) zu verwalten. Zum Beispiel können ein oder mehrere Anwendungsserver 9 von einem Finanzinstitut verwaltet werden, um Geldtransaktionen mit dem Mobilgerät 1 durchführen zu können.

Die erfindungsgemässe Chipkarte 2 enthält vorzugsweise mehrere private und öffentliche elektronische Schlüssel, die den Zugriff auf die OpenCard-Plattform und auf mehrere Dienste 8, 9 erlauben. Elektronische Schlüssel können auch vorgesehen werden, um mit externen Vorrichtungen 3, 3' zu kommunizieren. Diese verschiedenen Schlüssel werden vorzugsweise in einem gesicherten Speicherbereich des GSM-Kontrollers 20 und/oder des Kommunikationskontrollers 21 gespeichert. Damit kann sich der Benutzer in mehreren Systemen und für verschiedene Dienste zuverlässig identifizieren.

Wir werden jetzt sechs verschiedene Funktionsvarianten des beschriebenen Mobilgeräts diskutieren. Ein bestimmtes Mobilgerät 1 mit einer bestimmten Chipkarte 2 kann je nach Ausstattung und geladener Anwendungssoftware entweder alle oder nur einige von diesen Funktionsweisen durchführen.
1) Unabhängige Speisung von der induktiven Schnittstelle, keine funktionale Verknüpfung mit dem GSM-Mikrokontroller 20.
   In diesem Fall wird der Kommunikationskontroller 16 bzw. 21 induktiv von der externen Vorrichtung 3' oder mit dem internen Akkumulator 17 bzw. 26 gespeist. Er ist mit dem GSM-Mikrokontroller 20 logisch nicht ständig verknüpft. Die externe Vorrichtung kann den Kommunikationskontroller und die Antenne 15 speisen, um zum Beispiel Identifizierungsangaben oder elektronische Schlüssel im Speicherbereich des Kommunikationskontrollers zu lesen. Die Infrarotschnittstelle 14 wird nicht benutzt. Dieser Modus kann zum Beispiel nützlich sein, um das ebenfalls ausgeschaltete Mobilgerät als elektronischen Schlüssel mit einer Zutrittskontroll-Vorrichtung anzuwenden.
   Wird der GSM-Mikrokontroller 20 wieder gespeist, können logische Daten, zum Beispiel Nutzdaten oder Konfigurationsdaten, zwischen beiden Kontrollern wieder ausgetauscht werden. Dadurch kann zum Beispiel ein elektronischer Schlüssel mit einem TTP-gesicherten Beleg durch das Netz 4 in die Chipkarte 2 übertragen, vom GSM-Kontroller 20 empfangen und gespeichert und vom Kommunikationskontroller 16 oder 21 benutzt werden, auch wenn die GSM-Funktionen des Mobilgeräts während dieser Benutzung nicht verfügbar sind.
2) Unabhängige Speisung der induktiven Schnittstelle, funktionale Verknüpfung mit dem GSM-Mikrokontroller 20.
   Ähnlicherweise wird in diesem Fall der Kommunikationskontroller 16 oder 21 auch induktiv von der externen Vorrichtung 3' oder mit dem internen Akkumulator 17/26 gespeist. Die Infrarotschnittstelle wird ebenfalls nicht benutzt. Der Kommunikationskontroller ist aber mit dem GSM-Mikrokontroller 20 ständig logisch verbunden. Dadurch kann der Übertragungsprozess durch die Schnittstelle 31' auch die Daten im Speicherbereich des GSM-Kontrollers 20 und die Funktionen dieses Kontrollers und des Mobilgeräts anwenden. Es können zum Beispiel Datenelemente über die Schnittstelle 31' empfangen, die Signatur geprüft, und diese Datenelemente weiter vom GSM-Prozessor bearbeitet und/oder weitergeleitet werden.
3) Speisung der induktiven Schnittstelle mit dem Mobilgerät.
   Der Kommunikationskontroller 16/21 und die induktive/elektromagnetische Schnittstelle 15 werden von der Hauptbatterie des Mobilgeräts 1 gespeist. Die Infrarotschnittstelle wird nicht benutzt. Dadurch können Daten und Programme über grössere Distanzen induktiv übertragen werden. Es besteht vorzugsweise eine ständige Verknüpfung zwischen dem GSM-Kontroller 20 und dem Kommunikationskontroller 21.
   Wenn die gerätinterne Speisung ausfällt, zum Beispiel, wenn die Batterien des Mobilgeräts entladen sind oder wenn das Mobilgerät ausgeschaltet wird, wird vorzugsweise automatisch der erste Modus aktiviert.
4) Unabhängige Speisung der induktiven Schnittstelle, infrarote Schnittstelle aktiv.
   Der Infrarot-Sender-Empfänger 14 und der Kommunikationskontroller 16/21 werden beide von der Hauptbatterie des Mobilgeräts 1 gespeist. Die induktive Schnittstelle 15 wird nur benutzt, wenn sie von einer externen Vorrichtung 3' gespeist wird. Es besteht vorzugsweise eine ständige Verknüpfung zwischen dem GSM-Kontroller 20 und dem Kommunikationskontroller 21.
   Dieser Modus wird vorzugsweise vom Benutzer aktiviert, um mit externen infrarotfähigen Vorrichtungen 3 zu kommunizieren. Sinnvoll ist es aber, wenn dieser Modus defaultmässig nicht aktiviert ist.
5) Speisung der induktiven Schnittstelle mit dem Mobilgerät, infrarote Schnittstelle aktiv.
   Dieser Modus ist eine Kombination der Modi 3 und 4. Daten zwischen dem Mobilgerät 1 und einer externen Vorrichtung 3/3' können entweder oder gleichzeitig über die induktive und über die infrarote Schnittstelle über längere Distanzen übertragen werden. Es besteht vorzugsweise eine ständige Verknüpfung zwischen dem GSM-Kontroller 20 und dem Kommunikationskontroller 21.
6) Transparenter Modus

Der GSM-Kontroller 20 und der Kommunikationskontroller 21 sind ständig logisch verbunden. Nach einem Verbindungsaufbau mit einer extemen Vorrichtung 3 oder 3', entweder über die infrarote Schnittstelle 31 oder über die induktive Schnittstelle 31', werden die Daten transparent über das Mobilfunknetz 4 übertragen. Dadurch ist es möglich, über das Mobilgerät 1 einen transparenten Datenstrom in beiden Richtungen zwischen dem SIM-Server 5 und eine externe Vorrichtung 3, 3' zu etablieren.

Die externe Vorrichtung 3 beziehungsweise 3' kann je nach Anwendung durch einen beliebigen Apparat gebildet werden, welcher mit einem Sender-Empfänger 30 beziehungsweise 30' versehen wird, der es erlaubt, direkt über infrarot beziehungsweise induktiv / über Funkwellen mit dem Mobilgerät 1 zu kommunizieren, ohne Beanspruchung des Mobilfunknetzes. Im einfachsten Fall kann die externe Vorrichtung 3, 3' aus einem weiteren beschriebenen Mobilgerät bestehen. Die Erfindung erlaubt somit, jeden beliebigen Typ von Daten oder Programmen auszutauschen, welche auf den SIM-Karten der beiden Mobilgeräte gespeichert sind. Je nach SIM-Kartentyp und je nach den Verwaltungsprogrammen dieser beiden Karten ist es zum Beispiel möglich, Programme und/oder Daten von der einen zur anderen Karte zu übertragen oder zu kopieren. Falls die Karte einen Geldbetrag enthält, von welchem die Kommunikationstaxen abgezogen werden, ist es mit einem geeigneten Kommunikationsprogramm auch möglich, den gesamten oder einen Teil des Restbetrages von der einen Karte auf die andere zu übertragen, und somit eine Chipkarte mit den auf einer anderen Karte verfügbaren Beträgen aufzuladen.

Bei einer Anwendungsvariante der Erfindung wird die externe Vorrichtung 3, 3' durch einen Rechner oder ein Terminal gebildet, welcher/s mit einem Sender-Empfänger 30 beziehungsweise 30' versehen wird. Die Vorrichtung 3, 3' wird in diesem Fall vorzugsweise mit nicht dargestellten Dateneingabemitteln versehen, zum Beispiel mit einer Tastatur, und mit nicht dargestellten Datenanzeigemitteln, zum Beispiel mit einem Display (Bildschirm). Die Vorrichtung 3, 3' kann ausserdem mit einem nicht dargestellten Kommunikationsnetz verbunden werden, zum Beispiel über ein nicht dargestelltes Modem mit einem "Internet"- oder "Intranet"-Netz, oder mit einem beliebigen Typ eines Fix- oder Mobil-Kommunikationsnetzes. In die Vorrichtung 3, 3' eingegebene Daten oder Programme können dann über die Schnittstelle 31, 31' in die Chipkarte 2 kopiert werden; in umgekehrter Richtung können die in der Karte gespeicherten Daten zum Display der Vorrichtung 3, 3' übertragen und dort angezeigt werden.

Ein interaktiver Dialog, bestehend aus einer Folge von Kommunikationen in jeder Richtung ist ebenfalls zwischen der Chipkarte 2 und einem Rechner 3, 3' möglich. Eine mögliche Anwendung eines solchen Dialoges betrifft die Auswahl einer Option in einem auf dem Display einer externen Vorrichtung 3, 3' angezeigten Menü mithilfe des Mobiltelefons. Das Display der Vorrichtung 3, 3' zeigt in diesem Fall ein Menü an, zum Beispiel eine Liste von zum Verkauf vorgeschlagenen Produkten oder von Informationen. Der Benutzer eines beschriebenen Mobilgeräts 1 kann die Position eines Cursors in diesem Menü durch Betätigen der Cursorverschiebe-Tasten 13 auf der Tastatur seines Mobiltelefons steuern. Die Cursorverschiebe-Instruktionen werden mithilfe der beschriebenen Schnittstelle zur Vorrichtung 3, 3' gesendet. Der Benutzer betätigt eine Bestätigungstaste, zum Beispiel die Taste #, auf seiner Tastatur, um die ausgewählte Menüoption für gültig zu erklären, zum Beispiel um ein Produkt zu bestellen. Der Bestätigungsbefehl wird in gleicher Weise bis zur Vorrichtung 3, 3' übertragen, welche dann eine der ausgewählten Option entsprechende Routine ausführt. Die ausgeführte Routine kann zum Beispiel den Aufbau einer Kommunikation mit dem Lieferanten sowie die Übermittlung der Bestellung an diesen Lieferanten umfassen. In einer Variante umfasst die bei der Bestätigung einer Menüoption ausgeführte Routine die Aussendung einer Antwort durch die Schnittstelle 31, 31' zur Chipkarte 2, zum Beispiel einen Identifikationscode des gewählten Produktes. Mindestens ein Teil der in dieser Antwort enthaltenen Daten, zum Beispiel der Identifikationscode des bestellten Produktes, werden dann in der Chipkarte 2 gespeichert. Das auf die Chipkarte geladene Anwendungsprogramm kann dann zum Beispiel dem Produktlieferanten eine Kommunikation zusenden, zum Beispiel eine Kurzmeldung (Short Message SMS oder USSD-Meldung), welche diesen Produktidentifikations-Code enthält. Verschiedene andere Möglichkeiten von Produktbestellungen sind unter anderem in der obenerwähnten Patentanmeldung WO 98/28900 beschrieben.

Natürlich kann das beschriebene Mobilgerät auch benutzt werden, um nicht nur die Position eines Objektes zu steuern, sondern auch um mehrere Eigenschaften, wie z.B. Position, Farbe, Form, Funktion, Sichtbarkeit usw. von einem oder mehreren Objekten zu steuern.

Im Fall, wo das Menü auf dem Display der Vorrichtung 3 einer "Internet"- oder "Intranet"-Seite entspricht, welche zum Beispiel durch einen geeigneten "Browser" angezeigt wird, enthält die Kommunikation zwischen der Chipkarte und der Vorrichtung 3 vorzugsweise Instruktionen in der JAVA-Sprache (eingetragenes Warenzeichen von Sun Microsystems, Inc.), welche durch den genannten "Browser" direkt interpretiert werden können. Umgekehrt ist es ebenfalls erwünscht, dass die Verarbeitungsmittel 20, 21 einen Java-Interpreter umfassen, um Instruktionen in der JAVA-Sprache ausführen zu können. Andere vorzugsweise objektorientierte Sprachen, wie beispielweise Corba oder C++, könnten auch benutzt werden.

Die externe Vorrichtung 3, 3' kann beispielsweise auch ein POS-Gerät (Point of Sale) sein, zum Beispiel ein Bankautomat oder eine Kasse in einem Ladengeschäft. In diesem Fall kann die direkte Kommunikation mithilfe der Schnittstelle 14, 15 zum Beispiel ermöglichen, den auf die Chipkarte 2 geladenen Geldbetrag vom POS aus nachzuladen. Der Vorteil besteht darin, dass die SIM-Karte nachgeladen werden kann, ohne dass sie aus dem Mobilgerät 1 herausgezogen werden muss und ohne Erstellung einer gebührenpflichtigen Verbindung durch das Mobilfunknetz 4. Eine finanzielle Transaktion kann ebenfalls in der anderen Richtung erfolgen, durch Belastung des auf der Chipkarte 2 abgespeicherten Geldbetrages mit einem vorgegebenen Betrag und mit direkter Übermittlung des belasteten Betrages mithilfe der kontaktlosen Schnittstelle gemäss der Erfindung zur externen Vorrichtung 3, 3', zum Beispiel zu einem Automaten oder zum POS-Gerät in einem Warenhaus. Eine Transaktion in einem Ladengeschäft, welches mit POS-Geräten 3, 3' ausgerüstet ist, die mit Schnittstellen 30 und/oder 30' zum Kommunizieren mit den Chipkarten gemäss der Erfindung versehen sind, kann so die folgenden Schritte umfassen:
- direkte Übermittlung des zu bezahlenden Betrages durch das POS-Gerät 3/3' und durch die Schnittstelle 31/31' zur Chipkarte 2,
- Zwischenspeicherung dieses Betrages im Prozessor 20 der SIM-Chipkarte,
- Ausführung einer Routine durch den Mikrokontroller 20, damit der zu bezahlende Betrag auf dem Display 12 des Mobilgeräts 1 angezeigt wird,
- Bei Zustimmung zur angezeigten Zahl Bestätigung dieses Betrages durch den Kunden, zum Beispiel durch Drücken der Taste #.
- direkte Übermittlung dieses Bestätigungsbefehls zur Vorrichtung 3, 3' mithilfe der Schnittstelle 30, 30'.

Der zu bezahlende Betrag kann zum Beispiel sofort dem auf der Chipkarte 2 abgespeicherten Geldbetrag belastet werden. Falls der Geldbetrag auf der Karte 2 zur Begleichung der Transaktion genügt, kann der Transaktionsbetrag der Karte belastet werden und in einem Beleg verpackt werden, der über die kontaktlose Schnittstelle zur Vorrichtung 3, 3' übertragen wird. Diese verschiedenen Verbindungen erfolgen vorzugsweise signiert und verschlüsselt durch die oben-erwähnte TTP- oder PTP-Signierung und Verschlüsselungsmittel.

Bei einer Variante kann der Transaktionsbetrag durch irgendein Bank- oder Finanzinstitut, bei welchem der Abonnent Kunde ist, auf ein Bankkonto des Besitzers der Vorrichtung 3 transferiert werden. Zu diesem Zweck kann im Fall der Bestätigung des auf dem Display 12 angezeigten Betrages das auf die Chipkarte 2 geladene Programm eine Instruktion zur Aussendung einer einen Belastungsbefehl enthaltenden SMS- oder USSD-Kurzmeldung durch das Mobilgerät 1 oder durch die Vorrichtung 3, 3' zu einem Server 9 eines Finanzinstituts enthalten.

Die externe Vorrichtung 3, 3' kann auch durch eine Zutrittskontroll-Vorrichtung gebildet werden, welche das Kontrollieren des Kommens und Gehens an einer geschützten Örtlichkeit erlaubt, zum Beispiel in einer Fabrik oder innerhalb der Umzäunung eines Attraktionsparkes. Für diese Anwendung kann die Chipkarte 2 mit einem im Speicher abgespeicherten elektronischen Schlüssel geladen werden. Um in einer geschützten Zone Zutritt zu erhalten, ist es also notwendig, dass eine direkte Kommunikation zwischen der Chipkarte 2 und der Vorrichtung 3, 3' mithilfe der Schnittstelle 31, 31' aufgebaut wird. Der Zutritt zur geschützten Örtlichkeit wird nur dann erlaubt, wenn es sich nach dieser Kommunikation erweist, dass der in der Karte 2 gespeicherte elektronische Schlüssel korrekt ist und seinem Besitzer das Recht zum Eindringen in die geschützte Zone gibt. Bei dieser Anwendung ist vorteilhaft, dass der Kommunikationskontroller 16 beziehungsweise 21 elektrisch unabhängig vom Mobilgerät 1 funktionieren kann, so dass ein Zutritt sogar dann möglich wird, wenn die Batterien des Mobilgeräts 1 entladen sind.

Die Benutzung der verschieden ausgeführten Ressourcen kann der Bezahlung einer Gebühr untergeordnet werden. Ein in der SIM-Karte integrierter Zähler kann zum Beispiel die Anzahl der Benutzungen einer der Schnittstellen 14 oder 15 zählen, und eine Gebühr aus dieser Anzahl ermitteln. Das Gebühr kann auch von der Dauer der Benutzung abhängig sein, wenn die Chipkarte eine Zeitmessvorrichtung integriert. Die zu bezahlende Gebühr kann dann periodisch entweder von einem Geldkonto auf der Karte belastet werden oder in SMS- oder USSD-Billingsbelege verpackt werden, die signiert und verschlüsselt an einen Server 9 eines Finanzinstitut übertragen und dann einem Konto des Benutzers bei diesem Institut belastet werden.

## Patentansprüche

1. Chipkarte (2) enthaltend:
Datenverarbeitungsmittel (20), welche Daten speichern, die mindestens Identifikationsdaten eines Abonnenten eines Telekommunikationsnetzes enthalten,
elektrische Kontakte (24) auf der Oberfläche der Chipkarte, welche das Austauschen von Daten zwischen den genannten Datenverarbeitungsmitteln (20) und einem in einem Mobilfunknetz einsetzbaren Mobilgerät (1) ermöglichen, in welches Mobilgerät (1) die Chipkarte (2) in wegnehmbarer Weise einführbar ist,
einen Kommunikationskontroller (21), um über die genannten elektrischen Kontakte (24) den direkten Austausch von Daten über eine im Mobilgerät (1) integrierte kontaktlose Schnittstelle zwischen der Chipkarte und einer bezüglich des Mobilgeräts (1) externen Vorrichtung (3, 3') zu steuern, ohne dass beim Datenaustausch das genannte Mobilfunknetz beansprucht wird,
**dadurch gekennzeichnet, dass** die Chipkarte ausserdem einen Energiespeicher (26) zur Speisung des genannten Kommunikationskontrollers (21) enthält.

2. Chipkarte (2) nach dem vorhergehenden Anspruch, **dadurch gekennzeichnet, dass** der genannte Kommunikationskontroller (16; 21) eine serielle Datenübertragung über die genannte kontaktlose Schnittstelle ansteuert.

3. Chipkarte gemäss einem der Ansprüche 1 bis 2, **dadurch gekennzeichnet, dass** die Chipkarte im Weiteren Verschlüsselungsmittel enthält, um die Übertragung von verschlüsselten Daten über die benannte kontaktlose Schnittstelle (31, 31') zu ermöglichen.

4. Chipkarte gemäss einem der Ansprüche 1 bis 3, **dadurch gekennzeichnet, dass** die Chipkarte im weiteren Signierungsmittel enthält, um die Übertragung von signierten Daten über die benannte kontaktlose Schnittstelle (31, 31') zu ermöglichen.

5. Chipkarte gemäss einem der Ansprüche 1 bis 4, **dadurch gekennzeichnet, dass** einer oder mehrere private und öffentliche elektronische Schlüssel in einem Speicherbereich der Karte gespeichert sind, mit denen die Chipkarte auf gesicherte Anwendungen (8; 9) durch das Telekommunikationsnetz (4) zugreifen kann.

6. Chipkarte gemäss einem der Ansprüche 1 bis 5, **dadurch gekennzeichnet, dass** einer oder mehrere private und öffentliche elektronische Schlüssel in einem Speicherbereich der Karte gespeichert sind, mit denen die Chipkarte auf gesicherte bezüglich des genannten Mobilgeräts (1) externe Vorrichtungen (3, 3') durch die genannte kontaktlose Schnittstelle zugreifen kann.

7. Chipkarte gemäss einem der Ansprüche 1 bis 6, **dadurch gekennzeichnet, dass** sie im Weiteren Programmmittel enthält, um eine transparente Datenübertragung zwischen der benannten kontaktlose Schnittstelle (31, 31') und dem Telekommunikationsnetz (4) zu ermöglichen.

8. Chipkarte nach einem der Ansprüche 1 bis 7, **dadurch gekennzeichnet, dass** der Kommunikationskontroller (21) und/oder die Datenverarbeitungsmittel (20) einen Java-Interpreter umfasst (20, 21) um Instruktionen in der JAVA-Sprache auszuführen.

## Claims

1. Chipcard (2) containing:
data-processing means (20) which store data containing at least identification data of a subscriber to telecommunications network,
electrical contacts (24) on the surface of the chipcard which make possible the exchange of data between the said data-processing means (20) and a mobile apparatus (1), usable in a mobile radio network, into which mobile apparatus (1) the chipcard (2) is removably insertable,
a communications controller (21) for controlling via the said electrical contacts (24) the direct exchange of data via a contactless interface integrated in the mobile apparatus (1) between the chipcard and, relative to the mobile apparatus (1), an outside device (3, 3'), without making use of the said mobile radio network during the data exchange,
**characterised in that** the chipcard additionally contains a power storage (26) for feeding the said communications controller (21).

2. Chipcard (2) according to the preceding claim, **characterised in that** the said communications controller (16; 21) activates a serial data transmission via the said contactless interface.

3. Chipcard according to one of the claims 1 to 2, **characterised in that** the chipcard further contains encryption means in order to make possible the transmission of encrypted data via the said contactless interface (31, 31').

4. Chipcard according to one of the claims 1 to 3, **characterised in that** the chipcard further contains signing means in order to make possible the transmission of signed data via the said contactless interface (31, 31').

5. Chipcard according to one of the claims 1 to 4, **characterised in that** one or more private and public electronic keys are stored in a memory area of the card, by means of which keys the chipcard is able to access secured applications (8; 9) through the telecommunications network (4).

6. Chipcard according to one of the claims 1 to 5, **characterised in that** one or more private and public electronic keys are stored in a memory area of the card, by means of which keys the chipcard is able to access secured, relative to the said mobile apparatus (1) outside devices (3, 3') through the said contactless interface.

7. Chipcard according to one of the claims 1 to 6, **characterised in that** it further contains program means in order to make possible transparent data transmission between the said contactless interface (31, 31') and the telecommunications network (4).

8. Chipcard according to one of the claims 1 to 7, **characterised in that** the communications controller (21) and/or the data-processing means (20) comprise a Java interpreter (20, 21) for executing instructions in the JAVA language.

## Revendications

1. Carte à puce (2) comportant des moyens de traitement des données (20) qui mettent en mémoire des données dans lesquelles se trouvent au moins des données d'identification d'un abonné d'un réseau de télécommunications, des contacts électriques (24), à la surface de la carte à puce, qui permettent l'échange de données entre les moyens mentionnés de traitement des données (20) et un appareil mobile (1) pouvant être utilisé dans un réseau de téléphonie mobile, la carte à puce (2) pouvant être introduite de manière amovible dans cet appareil mobile (1), une unité de commande des communications (21) servant à commander, par l'intermédiaire des contacts électriques mentionnés (24), l'échange direct de données passant par une interface sans contact intégrée à l'appareil mobile (1), entre la carte à puce et un dispositif extérieur (3, 3') par rapport à l'appareil mobile (1) sans qu'il soit fait appel à l'ensemble du réseau de téléphonie mobile lors de l'échange de données, **caractérisée en ce que** cette carte à puce comporte en outre un accumulateur d'énergie (26) servant à alimenter l'unité de commande des communications (21).

2. Carte à puce selon la revendication précédente, **caractérisée en ce que** l'unité de commande des communications (16, 21) pilote une transmission série de données par l'intermédiaire de l'interface sans contact.

3. Carte à puce selon la revendication 1 ou 2, **caractérisée en ce qu'**elle possède en outre des moyens de cryptage permettant la transmission de données cryptées passant par l'interface sans contact (31, 31').

4. Carte à puce selon l'une des revendications 1 à 3, **caractérisée en ce qu'**elle possède en outre des moyens de signature permettant la transmission de données signées passant par l'interface sans contact (31, 31').

5. Carte à puce selon l'une des revendications 1 à 4, **caractérisée en ce qu'**une ou plusieurs clefs électroniques privées et publiques sont en mémoire dans une zone de mémoire de la carte, clefs avec lesquelles la carte à puce peut accéder à des applications protégées (8, 9) par l'intermédiaire du réseau de télécommunications (4).

6. Carte à puce selon l'une des revendications 1 à 5, **caractérisée en ce qu'**une ou plusieurs clefs électroniques privées et publiques sont en mémoire dans une zone de mémoire de la carte, clefs avec lesquelles la carte à puce peut accéder à des dispositifs protégés (3, 3') extérieurs par rapport à l'appareil mobile (1), par l'intermédiaire de l'interface sans contact mentionnée.

7. Carte à puce selon l'une des revendications 1 à 6, **caractérisée en ce qu'**elle possède en outre des moyens en logiciels destinés à permettre une transmission de données transparente entre l'interface sans contact (31, 31') et le réseau de télécommunications (4).

8. Carte à puce selon l'une des revendications 1 à 7, **caractérisée en ce que** l'unité de commande des communications (21) ou les moyens de traitement des données (20), ou les deux, comprennent un interprète Java (20, 21) servant à exécuter des instructions écrites en langage JAVA.
